# EUROPEAN PATENT APPLICATION

(11) **EP 4 588 811 A1**
(43) Date of publication of application: **23.07.2025**
(21) Application number: 24382042.0
(22) Date of filing: 16.01.2024
(51) Int. Cl.: B64G 1/64

(54) **SYSTEM FOR FIXING AND SEPARATING STRUCTURES**

(71) Applicant: Aciturri Engineering, S.L., 47151 Boecillo Valladolid (ES)
(72) Inventor: CIMADEVILLA GARCÍA, David, 47151 BOECILLO (Valladolid) (ES)
(74) Representative: Herrero & Asociados, S.L.

(57) **Abstract**

The structure attachment and separation system comprises a first part (3) connectable to a first structure (1), a second part (4) connectable to a second structure (2), and a lever (5) which is connected at one end to the first part (3) and at the other end to a connecting rod (6), the connecting rod (6) being in contact with the second part (4), the lever (5) and the connecting rod (6) being movable between a closed position, in which the first and second parts (3, 4) are fixed to each other, and an open position, in which the first and second parts (3, 4) can be separated from each other. It provides a simple and cost-competitive system for fixing and separating structures with a reduced number of components.

## Description

### Object of the invention

The present invention relates to a system for fixing and separating structures , in particular, but not exclusively, for fixing and separating structures used in the space industry, which are to be separated from each other after being joined together for a specific period of time, depending on the particular application.

### Background to the invention

The complexity of the space sector requires the use of sophisticated systems and mechanisms to ensure the success of all missions undertaken. Within the launch sequence of space rockets, some of the most critical moments are the separation of structures that are initially joined together, such as, for example, the rocket stages or the two halves of the cap to protect the cargo being carried.

Traditionally, pyrotechnic mechanisms have been used to carry out the separation of the aforementioned structures. This type of mechanism is still used today due to its proven reliability, although in recent times there has been a growing tendency to replace them with other types of mechanisms.

This is because, although they are reliable, their actuation generates shock waves that are damaging to the structure in which they are housed and to adjacent structures, and they are characterised by the fact that they are single-use systems.

Within the new fastening and separation systems used in the space sector there are several options, which are differentiated on the basis of the operating principle on which they are based and on the nature of the actuation that enables the system to be activated.

One of the most mature technologies in this new generation of mechanisms is the split nut, which is usually accompanied by electrical actuation and is based on magnetic or thermal operating principles.

For example, WO2022269597A1 describes a releasable fastening system for joining two cylindrical or tapered components, comprising an actuator that allows the transition from a geometrically locked configuration to an unlocked configuration.

This fastening system comprises connecting elements mounted on each of the components and pivoted around a common fastening axis. When the system is geometrically locked the connecting elements are in a relative over-centred position.

An actuator allows an unlocking force to be applied to the clamping system in the direction transverse to the clamping axis, which eliminates the relative over-centred position between the connecting elements and allows the clamped components to be released.

The main advantage of this system is that it is simple and easy to assemble, but it has certain shortcomings in relation to aspects that are critical in the space sector. This system has no system to prevent a sudden and unwanted transition from the locked configuration to the unlocked configuration, i.e. a system that ensures that the two components remain locked together until required.

Although the mechanism is simple to assemble, the way in which it is mounted presents some problems. In case it is mounted in the outer area of the joint, i.e. the area exposed to the atmosphere, the mechanism is exposed to the environment and the demanding environmental conditions that occur during the rocket's ascent trajectory, which implies on the one hand the need to use an adequate protection system and on the other hand an impact on reliability.

If mounted in the inner area, i.e. the volume enclosed by the structures, the problem of exposure to the environment disappears, but two new disadvantages arise. Indoor mounting prevents a quick inspection of the mechanism once the rocket has been assembled. In addition, in case of inboard mounting, the opening of the system is also inwards, which limits the maximum usable volume and introduces the risk of possible collisions with other devices or the payload.

EP0768241A1 describes a fastening and separation system for satellites, comprising a part that deforms elastically when pressed by a metal strip or band that is located between the satellite and a cam that rotates to produce such deformation. The system is attached to the upper ring of the launcher's payload adaptor by means of a part that allows it to be fixed.

A tensioning strip consisting of a metal strip divided into two parts allows a series of parts to be pressed together to hold the satellite to the ring of the adapter cone. Within this series of parts are several curved metal parts which have a cylindrical body at the bottom, which is pressed against a rotation axis located in a lower ring of the satellite.

The system also comprises two cams, and the axis of rotation of one cam coincides with that of the cylindrical body attached to the metal parts, while the other coincides with the part attached to the adaptor cone ring.

The main advantages of this system are its cost reduction and simplicity in relation to the alternatives that existed at the time, as well as the demonstration by means of tests that it is a functional system in practice. With regard to the disadvantages, there are two outstanding ones. The first is the fact that it is a system designed to keep a satellite attached to the adapter cone of the launcher that transports it, but in no case is there any reference to its use as a system for attaching and separating structures such as the launcher stages or the two halves of the cap. The second has to do with the method of action used, since according to the document the release of the tensioning strip is produced by the activation of pyrotechnic devices.

US3346929A describes a latch-type linkage that can be implemented in a limited access area and that is securely locked by moving an actuating lever in one direction only. Unlocking of the system occurs by moving the lever in the opposite direction. The system comprises an easily releasable latch that holds the system in a fully open position when in that position.

The main advantages of this system are the possibility to adjust the lever manually without the use of any external tool, its ability to be implemented in hard to reach areas, its ability to be operated remotely and the possibility to be used under vacuum conditions. The paper mentions the docking of space modules as a possible application of this system. Despite all the advantages of this solution, there are unresolved issues, e.g. how to actuate it in case it is not possible to do it manually. The system also does not include a system to prevent sudden release, nor is it foreseen to be used for the attachment and detachment of rocket structures.

EP2757297A2 describes a flange-type connection designed to hold two components together by means of a vacuum-tight connection, used for example to establish a connection between a gas pipe and a metal bellows, which contains elements coupled together by means of a pivoting lever. The system has one component which is attached to the pipe and another component which is attached to the bellows, both of which are coupled together by the action of the pivoting lever. The position of this lever allows the flange connection to be adjusted as required.

This system allows for a connection that is vacuum-tight and enables the quick, reliable and simple joining of two components. However, it cannot be used to attach and detach rocket structures because the lever is operated manually and without the aid of any external tool, which completely precludes its use in this type of application.

### Description of the invention

Therefore, an objective of the present invention is to provide a system for fixing and separating structures that is simple and cost-competitive and has a reduced number of components.

With the system for fixing and separating structures of the invention, the aforementioned disadvantages are solved, with other advantages that will be described below.

The system for fixing and separating structures according to the present invention is described in claim 1, and the dependent claims include additional features which are optional.

In particular, the system for attaching and detaching structures comprises:
a first part connectable to a first structure;
a second part connectable to a second structure; and
a lever which is connected at one end to the first part and at the other end to a connecting rod, the connecting rod being in contact with the second part, the lever and the connecting rod being movable between a closed position, in which the first and second parts are fixed to each other, and an open position, in which the first and second parts can be separated from each other.

In addition, the second part preferably comprises a complementary fitting projection with an inlet of the first part, which according to a preferred embodiment are spherical and cone-shaped respectively.

The structure fixing and separating system according to the present invention also preferably comprises a cylinder, which may be hydraulic or pneumatic, provided with a piston, the piston being movable to contact the lever to move the lever from its closing position to its opening position.

According to a preferred embodiment, the lever comprises an extension, which contacts the piston to move the lever from its closed to its open position.

In addition, the first part also preferably comprises a friction element for regulating the movement of the lever as well as a first locking pin, which limits the movement of the lever.

The structure attachment and detachment system according to the present invention also preferably comprises a locking projection movable between a locking position, in which it blocks movement of the lever, and a release position, in which it allows movement of the lever, wherein the locking projection, in its locking position, is located opposite the extension of the lever.

In addition, it also preferably comprises a torsion spring which pushes the locking projection into its locking position, a second locking pin, which limits the movement of the locking projection, and a third locking pin which limits the movement of the connecting rod.

The system for fixing and separating structures according to the present invention provides, among others, the following advantages:
- It comprises a passive system that serves the dual function of preventing sudden and undesirable opening and not compromising such opening when it is necessary to do so;
- It is suitable for installation on the inside of the structures to be joined and for closure from the outside, so that it can be easily inspected and assembled once the structures have been assembled. This also reduces environmental protection requirements and avoids the presence of protrusions that could compromise the aerodynamics of the rocket/launcher.
- By opening outwards from the structures it joins, it reduces the possibility of contact with other devices or cargo inside and also allows for an increase in the available usable volume.

### Brief description of the drawings

For a better understanding of what has been explained above, some drawings are included in which, schematically and only by way of a non-limiting example, a practical case of realisation is represented.
Figure 1 is an elevation view of the structure attachment and separation system according to the present invention in the direction transverse to the longitudinal axis of the joint, the system being in its closed configuration; and
Figures 2 to 5 are elevation views in the direction transverse to the longitudinal axis of the joint, showing the locking sequence of the structure attachment and separation system according to the present invention.

### Description of a preferred embodiment

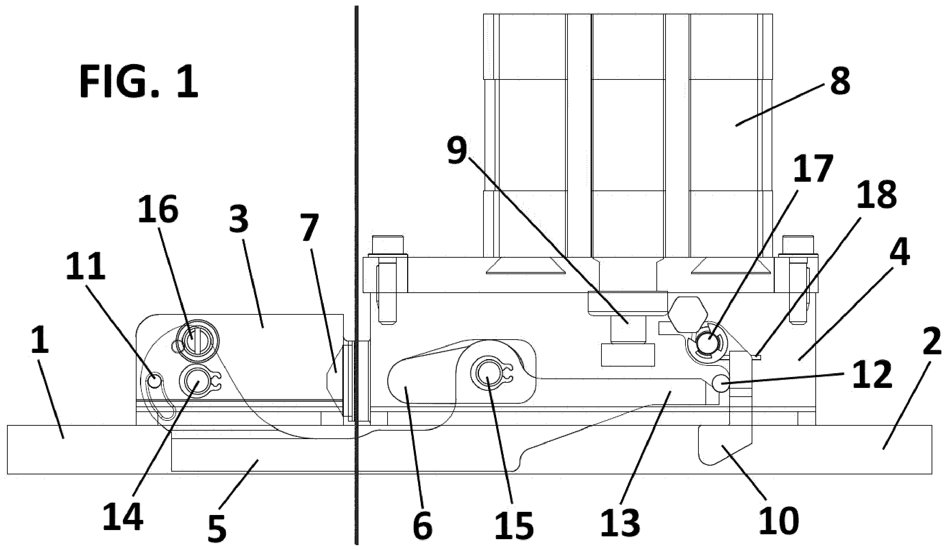

Figure 1 shows the system for fixing and separating structures according to the present invention.

The structures which are attached to each other are a first structure (1) and a second structure (2). By way of example only, the first and second structures (1, 2) may be space rocket stages or launchers or two halves of a cap protecting a payload, or the like, although it is evident that the structures could be different.

Furthermore, the system according to the present invention comprises a first part (3) and a second part (4), the first part (3) being attached to the first structure (1) and the second part (4) being attached to the second structure (2).

The first and second parts (3, 4) are in contact with each other by means of a spherical adjustment projection (7) on the second part and an entry on the first part, which has a truncated cone shape. This adjustment projection (7) ensures the closure of the system and facilitates the correct separation of the structures (1, 2) once the system has been opened.

The first part (3) comprises a first axis of rotation (14) for the rotation of a lever (5) around said first part. This lever (5) in turn contains a second axis of rotation (15) for the rotation of a connecting rod (6) with respect to said lever (5). This connecting rod (6) contacts the second part (4), as shown in figure 1. Furthermore, the first and second axes of rotation (14, 15) are located at opposite ends of the said lever (5).

The first and second parts (3, 4) which are attached to the first and second structures (1, 2), the lever (5), the connecting rod (6) and the first and second axis of rotation (14, 15) form a fastening system.

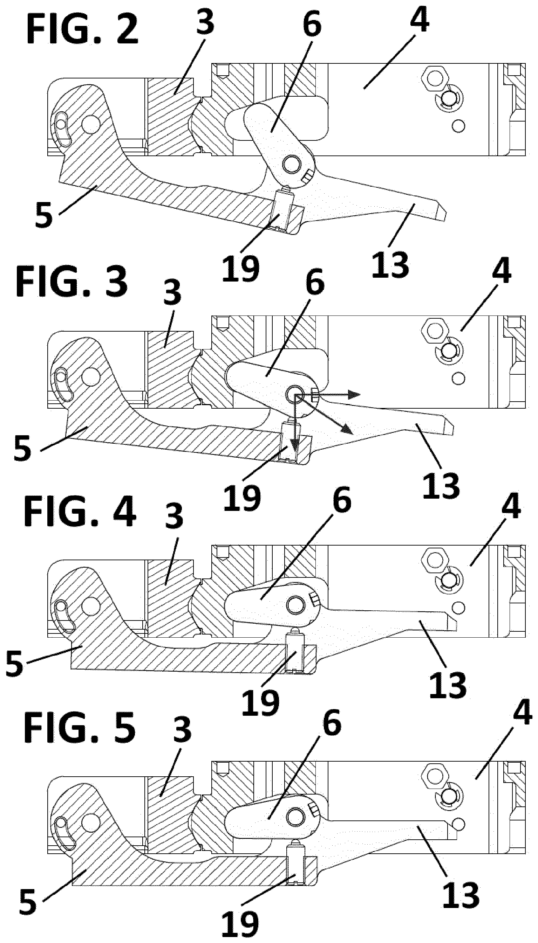

In this way, the rotation of the lever (5) with respect to the first part (3) and the rotation of the connecting rod (6) with respect to the lever (5) determine the closing sequence of the mechanism, which is shown in figures 2 to 5.

This sequence begins by bringing the connecting rod (6) into contact with the second part (4), figure 2. At this point there is no preload and the lever (5) has not undergone any deformation.

As the lever (5) rotates relative to the first part (3) in the counterclockwise direction of figure 3, a preload begins to build up on the adjusting projection (7) of the first and second parts (3, 4) and the lever (5) begins to deform.

The point of maximum preload and maximum deformation of the lever (5) occurs when the plane defined by the first and second axes of rotation (14, 15) is parallel to the longitudinal axis of the joint between the first and second parts (3, 4), shown in figure 4.

In this situation, the system is in an unstable equilibrium condition. Closing of the mechanism is achieved when the lever (5) rotates from the maximum preload situation and is positioned so that the first and second axes of rotation (14, 15) are in an over-centred condition with respect to the longitudinal axis of the joint between the first and second parts (3, 4).

The closing of the system, shown in figure 5, is done manually or by using an auxiliary tool if the force required to close the system is too high.

When the system according to the present invention is in the closed position, its opening is achieved by applying a force in a direction normal to the longitudinal axis of the joint on an extension (13) forming part of the lever (5).

This force is exerted by a piston (9), which is pneumatically or hydraulically actuated and is contained in a cylinder (8) which is attached to the second part (4).

Furthermore, in order to control the opening of the system according to the present invention, the first part (3) comprises a first locking pin (11) which allows restricting the rotation of the lever (5), so that the maximum angle it can reach after opening is defined.

In addition, the first part (3) also includes a friction element (16) that dissipates part of the kinetic energy of the lever (5) so that the rotation of the lever (5) is less abrupt.

Also to control the opening, the lever (5) comprises a third locking pin (19), shown in figures 2 to 5, whose purpose is to prevent the connecting rod (6) from rotating uncontrolled around the second axis of rotation (15) once contact with the second part (4) is lost, thus eliminating the possibility of unwanted contact with any other adjacent element, such as, for example, the piston (9).

The system according to the present invention also comprises a safety system, consisting of a locking projection (10), which prevents accidental opening of the system.

This locking projection (10) rotates around a third axis of rotation (17), which is integrated in the second part (4). This rotation is controlled by a torsion spring (18) and is also constrained by a second locking pin (12). The behaviour of this locking projection (10) is different depending on the situation of the system.

Three specific situations can be distinguished:
During the closing process of the system, the locking projection (10) does not resist the rotation of the lever (5). This is achieved by suitably designing both the locking projection (10) and the extension (13) so that when they come into contact, a force is produced on the locking projection (10) that causes it to rotate counterclockwise with respect to the third axis of rotation (17), as shown in the figures. Once the lever (5) has passed over the locking projection (10), it returns to its initial position thanks to the action of the torsion spring (18).

While the system is closed, the purpose of the locking projection (10) is to prevent a sudden opening condition from occurring. This is achieved by ensuring that in the hypothetical case that such a condition occurs, the point of contact between the extension of the lever (13) and the locking projection (10) is such that the rotation generated in the locking projection (10) around the third axis of rotation (17) is in the clockwise direction shown in the figures. In this way, it can be ensured that sudden opening cannot occur in any case.

When the pneumatic system is actuated, the locking projection (10) must not offer any resistance to the opening of the system. The piston (9) contacts the locking projection (10) before contacting the extension (13), which causes it to rotate in the counterclockwise direction shown in the figures. Thus, when the piston (9) contacts the extension (13), the restriction to opening has been removed and opening can therefore take place properly.

## Claims

1. A system for attaching and detaching structures, comprising:
a first part (3) connectable to a first structure (1); and
a second part (4) connectable to a second structure (2),
**characterised in that** the system also comprises a lever (5) which is connected at one end to the first part (3) and at the other end to a connecting rod (6), the connecting rod (6) being in contact with the second part (4), the lever (5) and the connecting rod (6) being movable between a closed position, in which the first and second parts (3, 4) are fixed to each other, and an open position, in which the first and second parts (3, 4) can be separated from each other.

2. Structure attachment and separation system according to claim 1, wherein the second part (4) comprises an adjustment projection (7) complementary to an inlet of the first part (3).

3. Structure attachment and separation system according to claim 2, wherein the adjustment projection (7) has a spherical shape and a recess in the first part (3) has a truncated cone shape.

4. System for fixing and separating structures according to any one of the preceding claims, which also comprises a cylinder (8) provided with a piston (9), the piston (9) being movable to contact the lever (5) to move the lever (5) from its closed position to its open position.

5. Structure fixing and separation system according to claim 4, wherein the lever (5) comprises an extension (13), which is contacted by the piston (9) to move the lever (5) from its closed position to its open position.

6. System for fixing and separating structures according to any one of the preceding claims, wherein the first part (3) comprises a friction element (16) for regulating the movement of the lever (5).

7. Structure fixing and separation system according to any one of the preceding claims, wherein the first part (3) comprises a first locking pin (11), which limits the movement of the lever (5).

8. Structure attachment and separation system according to any one of the preceding claims, also comprising a locking projection (10) movable between a locking position, in which it blocks the movement of the lever (5), and a releasing position, in which it allows the movement of the lever (5).

9. Structure fixing and separating system according to claims 5 and 8, wherein the locking projection (10), in its locked position, is located opposite the extension (13) of the lever (5).

10. Structure attachment and detachment system according to claim 8 or 9, also comprising a torsion spring (18) which pushes the locking projection (10) into its locked position.

11. Structure attachment and separation system according to any one of claims 8 to 10, also comprising a second locking pin (12), which limits the movement of the locking projection (10).

12. Structure attachment and separation system according to any one of the preceding claims, also comprising a third locking pin (19) which limits the movement of the connecting rod (6).
